# EUROPÄISCHE PATENTANMELDUNG

(11) **EP 2 301 358 A2**
(43) Veröffentlichungstag der Anmeldung: **30.03.2011**
(21) Anmeldenummer: 10009071.1
(22) Anmeldetag: 01.09.2010
(51) Int. Cl.: A21B 3/00, F28D 21/00, F28F 27/02

(54) **Backofen-Abluft-Wärmerückgewinnungsanlage**

(30) Priorität: 02.09.2009 DE 102009039689
(71) Anmelder: Ganzenmüller, Ulrike, 89584 Rißtissen (DE)
(72) Erfinder: Heine, Stefan, 70435 Stuttgart (DE)
(74) Vertreter: Meyer, Thorsten

(57) **Zusammenfassung**

Die Erfindung betrifft eine Backofen-Abluft-Wärmerückgewinnungsanlage (1) für Backöfen, die die Abluft aus Rauchgas und Schwaden aus wenigstens einem Backofen (2), auch unterschiedlicher Bauform, einem die Abluft durchmischenden Sammel-Kasten (3) oder -Rohr (31) zugeführt wird, bei der im Lauf der Abluft nach dem Sammel-Kasten (3) oder - Rohr (31) ein Wärmetauscher (4) vorgesehen ist, wobei der Wärmetauscher (4) durch ein die Abluft führendes Rohrleitungssystem (41), welches außen mit einem die Wärme der Abluft aufnehmenden Fluid (5) umströmt ist, ausgestaltet ist, wobei ein Austritts-Sammel-Kasten (6) oder -Rohr im Abluftweg nach dem Wärmetauscher (4) vorgesehen ist, von welchem die abgekühlte Abluft einem Kamin (7) zugeführt wird.

## Beschreibung

Die Erfindung betrifft eine Backofen-Abluft-Wärmerückgewinnungsanlage für Backöfen.

Seit geraumer Zeit gibt es Wärmerückgewinnungsanlagen für Backöfen, bei denen die Abluft aus wenigstens einem Backofen, auch unterschiedlicher Bauform, einem die Abluft durchmischenden Sammel-Kasten oder -Rohr zugeführt wird, wobei im Lauf der Abluft nach dem Sammel-Kasten oder -Rohr ein Wärmetauscher vorgesehen ist. Dabei sind die Wärmetauscher durch ein die Abluft führendes Rohrleitungssystem, welches außen mit einem die Wärme der Abluft aufnehmenden Fluid umströmt ist, ausgestaltet, denen ein Austritts-Sammel-Kasten oder - Rohr im Abluftweg nach dem Wärmetauscher nachgeschaltet ist, von welchem die abgekühlte Abluft einem Kamin zugeführt wird.

Bei diesen Anlagen wird zumeist je ein Luftweg für das Rauchgas aus dem/den Backöfen und für den wasserhaltigen Schwaden vorgesehen.

Die Wärmetauscher werden durch Klappensysteme dem Luftweg zu- oder abgeschaltet. Bei einer Fehlfunktion der Klappensysteme oder einer Verschmutzungs-bedingten oder Kondens-bedingten Verstopfung des Wärmetauschers Blockierung des Luftwegs durch den Wärmetauscher kann es dabei zu einer gefährlichen Überhitzung des Ofens oder der dem Ofen im Luftweg nachgeschalteten Luftführungen kommen.

Zudem sind die bekannten Anlagen auf einen starken Zug durch den dem Wärmetauscher im Luftweg nachgeschalteten Kamin angewiesen, weshalb diese entsprechend im Querschnitt groß unter Beeinträchtigung des Wirkungsgrades des Wärmetauschvorgangs dimensioniert werden müssen.

Beim Stand der Technik wird dabei jedoch die konstruktionsbedingt unterschiedlichen Zugverhältnisse zu starken Schwankungen im Backergebnis. Auch können alte Geräte nicht beim Ausfall des Wärmetauschers weiter betrieben werden und somit kann der Bäcker nicht backen, was zu kostenintensiven Ausfällen führt.

Noch bis vor ein paar Jahren war es üblich für jeden Backofen einen separaten Kamin zu bauen, der einen, auf der jeweiligen Backofentyp abgestimmten, Unterdruck haben musste. Das bedeutete auch für jeden Backofen einen eigenen Abgaswärmetauscher. Die dadurch entstandenen Investitionskosten standen in keinem akzeptablen Verhältnis zum Ertrag.

Herkömmliche Wärmetauschersysteme setzen sich binnen weniger Wochen mit Backmittelresten und Russ als auch anderen mitgeführten Partikeln oder Restbeständen zu. Es muss regelmäßig unter Ausfall der Backöfen eine Reinigung erfolgen.

Aufgabe der Erfindung ist es eine verbesserte Wärmerückgewinnungsanlage für Backöfen zur Verfügung zu stellen, bei der die einer oder mehrere der genannten Nachteile überwunden sind.

Diese Aufgabe wird durch eine Backofen-Abluft-Wärmerückgewinnungsanlage für Backöfen nach den Merkmalen des Anspruchs 1, 5 und 9 gelöst.

Erfindungsgemäß zeichnet sich die Erfindung nach einem ersten Aspekt, dadurch aus dass eine Backofen-Abluft-Wärmerückgewinnungsanlage für Backöfen, die die Abluft aus Rauchgas und Schwaden aus wenigstens einem Backofen, auch unterschiedlicher Bauform, einem die Abluft durchmischenden Sammel-Kasten oder -Rohr zugeführt wird, bei der im Lauf der Abluft nach dem Sammel-Kasten oder -Rohr ein Wärmetauscher vorgesehen ist, wobei der Wärmetauscher durch ein die Abluft führendes Rohrleitungssystem, welches außen mit einem die Wärme der Abluft aufnehmenden Fluid umströmt ist, ausgestaltet ist, wobei ein Austritts-Sammel-Kasten oder -Rohr im Abluftweg nach dem Wärmetauscher vorgesehen ist, von welchem die abgekühlte Abluft einem Kamin zugeführt wird, derart ausgestaltet ist, dass parallel zum Wärmetauscher zwischen Sammelkasten und Austritts-Sammelkasten ein Bypass vorgesehen ist, welcher den Abluftstrom durchzuleiten vermag, wobei ein Verschlussklappensystem vorgesehen ist, welches den Wärmetauscher und/oder den Bypass für die Abluft öffnet oder sperrt, wobei eine die Anlage überwachende Regelungseinheit (Sicherheitseinheit) vorgesehen ist, welche im Falle einer Fehlfunktion einer der Komponente die Verschlussklappen so einstellt oder steuert, dass der Bypass vollständig geöffnet wird.

Die Bypassklappe verhindert dabei eine ungewollte und gefährliche Überhitzung durch automatische Öffnung des Bypass vermittels der Klappen wenn der Wärmetauscher verstopft oder sonst eine Fehlfunktionen aufweist. So bleibt der Backbetrieb sichergestellt und es kann zu keiner Kohlenmonoxidvergiftung kommen. Durch die Erfindung kann auch bei Störungen problemlos weitergebacken werden.

Dabei ist im Sinne der Erfindung zwischen Sammel-Kasten und Sammel-Rohr vor dem Wärmetauscher kein Unterscheid zu machen.

Durch die Bewusste Vermischung von Rauchgas und Schwaden werden die Ablagerungen an den Innenseiten des Wärmetauschers auf ein Minimum reduziert. Im Gegensatz zu anderen vorbekannten Systemen setzt sich das System nicht innerhalb kürzester Zeit zu. Es genügt ein einfaches Ausfegen des Austritts-Sammelkastens, da die zusammen abgetrockneten Partikel dort durch den Luftstrom hingeblasen werden und herunter fallen, ohne die Rohre des Wärmetauschers wie herkömmlich durch Anlagerung und Verkrustung zuzusetzen. Der maximale Wirkungsgrad bleibt so durch immer saubere Oberflächen erhalten, die Investitionskosten sind geringer, zudem ist das Systeme wartungsärmer. Eine verbesserte Umweltverträglichkeit ist zudem gegeben.

Nach einem zweiten Aspekt der Erfindung ist die Ausgestaltung **dadurch gekennzeichnet, dass** am Abluft-Austrittsende des Kamins im Abluftweg ein Saugzug-Gebläse vorgesehen ist, welches die Abluft nach Außen zieht, wobei das Saugzug-Gebläse vermittels einer Regelungseinheit und einem hierzu ausgewertetem Drucksensor, der im Sammelkasten oder dem Austritts-Sammelkasten angeordnet ist, so gesteuert ist, dass in dem Sammelkasten oder dem Austritts-Sammelkasten mit einem konstanten Unterdruck die Abluft angesaugt wird.

Das nach geschaltete Saugzug-Gebläse hält von Vorteil den Unterdruck mittels SPS-Steuerung und Druckmessung konstant (Konstantregelung), wobei der Pa-Wert in einer Ausgestaltung mittels der Steuerung bei Bedarfsfall angepasst werden kann.

Nach einem dritten Aspekt der Erfindung ist die Ausgestaltung **dadurch gekennzeichnet, dass** der Wärmetauscher durch ein Bündel von parallel angeordneten, die Abluft durchleitenden Rohrleitungen ausgebildet ist, die wiederum in einem Hohlkörper angeordnet sind, der dessen Außenseiten einschließt und mit einem Fluid zur Kühlung der Außenseiten der Rohrleitungen durchflossen wird. Dem folgend kann nach einer vorteilhaften Ausgestaltung der Hohlkörper durch ein Rohr ausgebildet sein.

Die vorgeschlagenen erfindungsgemäßen Anordnungen haben den Vorteil, dass das Rauchgas und der Schwaden der einzelnen Backöfen nicht mehr getrennt behandelt werden müssen, sondern dass diese im Sammelkasten vermischt und zusammen dem Wärmetauscher zugeführt werden. Somit können in den Backöfen Öl als auch Gas für die Beheizung verwendet werden als auch Festbrennstoffe.

Durch die gleichzeitige Abkühlung von Rauchgas und Schwaden wird erreicht, das mitgetragenes Material einfach durch Abflüsse abfließen kann, oder trocknet und von den glatten Wandungen der Rohrleitungen abfällt und ausgekehrt werden kann.

Die Abgastemperatur wird umweltfreundlich um ca. 150°C gesenkt. Es treten keine Witterungs-bedingten Zugschwankungen mehr auf.

Eine vorteilhafte Weiterbildung der Erfindung nach einem der drei Aspekte kennzeichnet sich dadurch aus, dass unmittelbar nach einem Backofen ein Drucksensor im Abluftweg vor einer Stellklappe vorgesehen ist, wobei der Drucksensor die motorisch gesteuerte Zustellung der Stellklappe so regelt, dass der im Backofen wirkende Saugzug des Sammelkastens vorwählbar einstellbar ist.

Eine weitere vorteilhafte Weiterbildung schlägt vor, dass die Regelungseinheit so ausgestaltet und eingestellt ist, dass in jedem Backofen ein Unterdruck erzeugt wird. Von Vorteil wird dem folgend im Sammelkasten und/oder einem Backofen ein konstanter Unterdruck erzeugt.

Bevorzugterweise entzieht der Wärmetauscher der Abluft bis zu dessen Kondensationsgrenze Wärme, wobei hierzu Sensoren vorgesehen sind, die den Kondensationspunkt der Abluft messen, und eine die Sensoren auswertende Fluid-Regelung den Fluid-Strömungsfluss und damit den Kühlungsgrad steuert. Bevorzugterweise erfolgt diese Steuerung auch über die Regelungseinheit.

Die Wandungen der Rohleitungen des Wärmetauschers sind von Vorteil durch Glattrohre aus Edelstahl ausgestaltet.

Vorteilhafterweise steuert die Regelungseinheit die Stellklappen und/oder das Verschlussklappensystem so, dass bei Abschalten der Backöfen deren Abluftzug verschlossen wird um deren Auskühlung zu verringern. Dies wird auch Komfort-Steuerung genannt.

Durch die Komfort-Steuerung der Klappen reduziert sich die Auskühlung der Backöfen, so das sich die Aufheizzeiten der Backöfen unter Energieeinsparung stark verkürzt.

Durch die nun mögliche kompakte Bauform benötigen die erfindungsgemäßen Anlagen nicht mehr wie bei den bisherigen bekannten Bauformen eine Stellfläche von 3 - 5 qm da diese platzsparend über den Backöfen montiert werden können.

Zur Erlangung maximaler Sicherheit können an den Außenwänden des Wärmetauschers für den Fall einer totalen Fehlfunktion zur Ableitung von Überdruck Sicherheitsklappen vorgesehen sein, die nach Außen gegen eine Federspannung oder mit Überwindung einer Haltekraft aufgehen können. Größere Schäden sind dadurch ausgeschlossen.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung einer erfindungsgemä- ßen Backofen-Abluft-Wärmerückgewinnungsanlage,
- Fig. 2: zeigt eine schematische Schnittdarstellung aus Fig. 1 in Blickrichtung II, und
- Fig. 3: die Backofen-Abluft-Wärmerückgewinnungsanlage aus Fig. 1 mit angeschlossenen Backöfen und einem Kamin.

Die in den Figuren gleichen Bezugsziffern bezeichnen gleiche oder gleich wirkende Elemente.

Ziel der Anlage ist es die am Backofen anstehenden Rauchgase und Schwaden gesammelt abzuleiten um die noch vorhandene Wärmeenergie zu entziehen und diese für Heizzwecke zu Verfügung zu stellen.

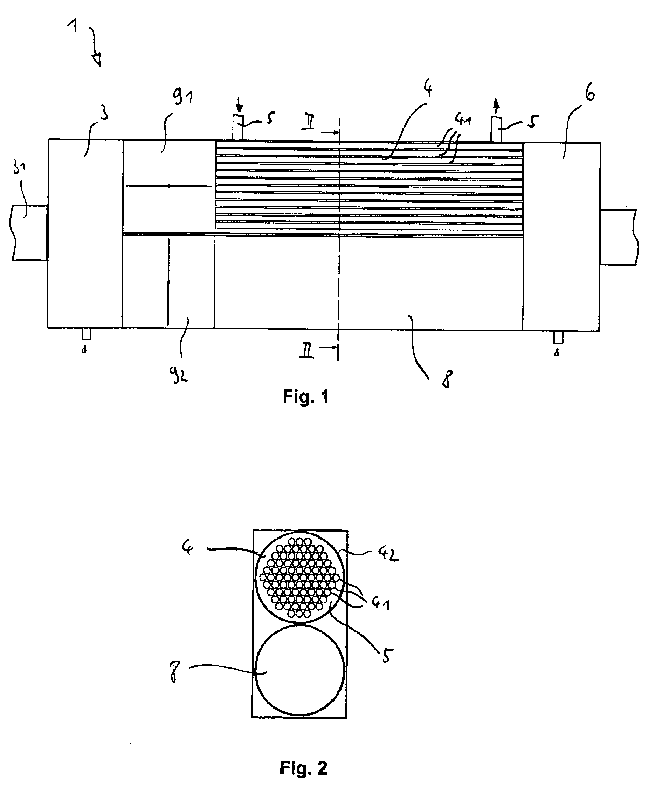

In Fig. 1 ist eine schematische Schnitt-Darstellung durch eine erfindungsgemäße Backofen-Abluft-Wärmerückgewinnungsanlage 1 für die Abluft aus Rauchgas und Schwaden aus wenigstens einem Backofen gezeigt.

Die Abluft wird durch ein Sammel-Rohr 31 einem die Abluft durchmischenden Sammel-Kasten 3 zugeführt. An den Sammel-Kasten 3 schließt sich ein Wärmetauscher 4 und ein Bypass 8 an, welche jeweils über ein steuerbares Verschlussklappensystem 91 bzw. 92 die Abluft mehr oder weniger hindurchleiten.

Der Wärmetauscher 4 ist durch ein die Abluft führendes Rohrleitungssystem 41 ausgebildet, welches außen mit einem die Wärme der Abluft aufnehmenden Fluid 5 umströmt ist.

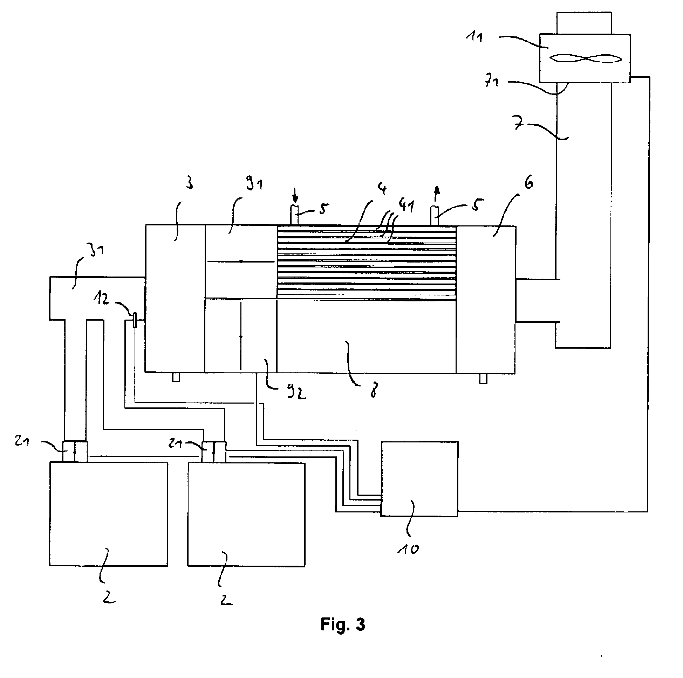

Im Abluftweg nach dem Wärmetauscher bzw. Bypass schließt sich ein Austritts-Sammel-Kasten 6 an, von welchem die abgekühlte Abluft einem Kamin 7 zugeführt wird, siehe hierzu Fig. 3.

In Fig. 2 ist der Wärmetauscher 4 aus Fig. 1 in einer Schnittdarstellung in Blickrichtung II gezeigt. Deutlich wird, dass im Beispiel der Wärmetauscher 4 durch ein Bündel von parallel angeordneten, die Abluft durchleitenden Rohrleitungen 41 ausgebildet ist, die wiederum in einem Hohlkörper 42 angeordnet sind, der dessen Außenseiten einschließt und mit einem Fluid 5 zur Kühlung der Außenseiten der Rohrleitungen 41 durchflossen wird. Der Hohlkörper 42 als auch der Bypass 8 sind dabei durch ein Rohr ausgebildet.

Die Wandungen der Rohleitungen 41 des Wärmetauschers 4 sind im Beispiel durch Glattrohre aus Edelstahl ausgestaltet. Hierdurch können Schmutz und andere Stoffe kaum anhaften. Von Vorteil sind sämtliche mit den Rauchgasen und Schwaden in Berührung kommenden Metallteile aus Edelstahl.

In Fig. 3 ist auch die die Anlage überwachende Regelungseinheit 10 (Sicherheitseinheit) gezeigt, welche im Falle einer Fehlfunktion einer der Komponenten die Verschlussklappen 91, 92 so einstellt oder steuert, dass der Bypass 8 vollständig geöffnet wird.

Am Abluft-Austrittsende 71 des Kamins 7 ist im Abluftweg ein Saugzug-Gebläse 11 vorgesehen, welches die Abluft nach Außen zieht, wobei das Saugzug-Gebläse 11 vermittels der Regelungseinheit 10 und einem hierzu ausgewertetem Drucksensor 12, der vor dem Sammelkasten 3 angeordnet ist, so gesteuert ist, dass in dem Sammelkasten 3 mit einem konstanten Unterdruck die Abluft der Backöfen 2 angesaugt wird.

Unmittelbar nach den Backöfen 2 ist ein Drucksensor im Abluftweg vorgesehen ist, wobei der Drucksensor über die Regelungseinheit 10 die motorisch gesteuerte Zustellung der Stellklappen 21 so regelt, dass der im jeweiligen Backofen 2 wirkende Saugzug des Sammelkastens 3 vorwählbar einstellbar ist. Dabei wird in jedem Backofen 2 ein Unterdruck erzeugt. Des Weiteren wird ein gleichmäßiger Unterdruck erzeugt wodurch bekannte natürliche Schwankungen des drucks im Kamin ausgeglichen werden (Minderdruck und Überdruck).

Infolge dessen tritt eine Laufruhe der Brenner an den Backöfen auf die durch den gleichmäßigen laufen deutlich weniger Energieverbrauchen. (6-8%).

Die Regelungseinheit 10 ist im Beispiel so eingestellt, dass die Stellklappen 21 und/oder das Verschlussklappensystem 91, 92 so gesteuert ist, dass bei Abschalten der Backöfen 2 deren Abluftzug verschlossen wird, um deren Auskühlung zu verringern.

Durch diese so genannte Komfort-Stellung der Klappen nach einer gewissen Abkühlungszeit der Brenner werden die Aufheizzeiten der Backöfen um bis zu 40% reduziert.

Entgegen anderen Bekannten Anlagen werden bei der hier vorgestellten Rauchgas und Schwaden vermischt, was zu einem ständigen Reinigungsprozess an den Glattrohrinnenseiten führt. Dadurch bleiben Leistungseinbußen durch Verschmutzen durch den Ruß und den Schwaden aus.

Es ist auch möglich im Sinne der Erfindung vorzusehen, dass separate Tauscher für Rauchgas und Schwaden vorgesehen sind, wobei der Vermischungseffekt dann durch eine Zeitsteuerung von Klappen erzeugt wird, die Rauchgas und Schwaden gezielt vermischen.

Die Anlage ist so konzipiert, dass diese über die Backöfen montiert werden kann und somit kein Platz bzw. Stellfläche in der Backstube benötigt wird.

Durch die Verbindung und Steuerung der einzelnen Komponenten mit der Regelungseinheit können sämtliche Zustände abgelesen und verändert werden, sowie auch eine aktive Druckanpassung am Backofen vorgenommen werden, zudem reduziert sich über das Saugzuggebläse der Einsatz der Primärenergie und somit des Brennstoffes der die Umwelt belastet.

### Bezugszeichenliste

- 1: Backofen-Abluft-Wärmerückgewinnungsanlage
- 2: Backofen
- 21: Stellklappe
- 3: Sammel-Kasten
- 31: Sammelrohr
- 4: Wärmetauscher
- 41: Rohrleitungssystem
- 42: Hohlkörper
- 5: Fluid
- 6: Austritts-Sammel-Kasten
- 7: Kamin
- 71: Abluft-Austrittsende
- 8: Bypass
- 91,92: Verschlussklappensystem
- 10: Regelungseinheit
- 11: Saugzug-Gebläse
- 12: Drucksensor

## Patentansprüche

1. Backofen-Abluft-Wärmerückgewinnungsanlage (1) für Backöfen, die die Abluft aus Rauchgas und Schwaden aus wenigstens einem Backofen (2), auch unterschiedlicher Bauform, einem die Abluft durchmischenden Sammel-Kasten (3) oder -Rohr (31) zugeführt wird,
bei der im Lauf der Abluft nach dem Sammel-Kasten (3) oder - Rohr (31) ein Wärmetauscher (4) vorgesehen ist,
wobei der Wärmetauscher (4) durch ein die Abluft führendes Rohrleitungssystem (41), welches außen mit einem die Wärme der Abluft aufnehmenden Fluid (5) umströmt ist, ausgestaltet ist,
wobei ein Austritts-Sammel-Kasten (6) oder -Rohr im Abluftweg nach dem Wärmetauscher (4) vorgesehen ist, von welchem die abgekühlte Abluft einem Kamin (7) zugeführt wird,
**dadurch gekennzeichnet,**
**dass** parallel zum Wärmetauscher (4) zwischen Sammelkasten (3) und Austritts-Sammelkasten (6) ein Bypass (8) vorgesehen ist, welcher den Abluftstrom durchzuleiten vermag,
wobei ein Verschlussklappensystem (91, 92) vorgesehen ist, welches den Wärmetauscher (4) und/oder den Bypass (8) für die Abluft öffnet oder sperrt,
wobei eine die Anlage überwachende Regelungseinheit (10) (Sicherheitseinheit) vorgesehen ist, welche im Falle einer Fehlfunktion einer der Komponenten die Verschlussklappen (91, 92) so einstellt oder steuert, dass der Bypass (8) vollständig geöffnet wird.

2. Anlage nach Anspruch 1,
**dadurch gekennzeichnet,**
**dass** am Abluft-Austrittsende (71) des Kamins (7) im Abluftweg ein Saugzug-Gebläse (11) vorgesehen ist, welches die Abluft nach Außen zieht, wobei das Saugzug-Gebläse (11) vermittels einer Regelungseinheit (10) und einem hierzu ausgewertetem Drucksensor (12), der im oder vor dem Sammelkasten (3) oder dem Austritts-Sammelkasten (6) angeordnet ist, so gesteuert ist, dass in dem Sammelkasten (3) oder dem Austritts-Sammelkasten (6) mit einem konstanten Unterdruck die Abluft angesaugt wird.

3. Anlage nach Anspruch 1 oder 2,
**dadurch gekennzeichnet,**
**dass** der Wärmetauscher (4) durch ein Bündel von parallel angeordneten, die Abluft durchleitenden Rohrleitungen (41) ausgebildet ist, die wiederum in einem Hohlkörper (42) angeordnet sind, der dessen Außenseiten einschließt und mit einem Fluid (5) zur Kühlung der Außenseiten der Rohrleitungen (41) durchflossen wird.

4. Anlage nach Anspruch 3,
**dadurch gekennzeichnet,**
**dass** der Hohlkörper (42) durch ein Rohr ausgebildet ist.

5. Backofen-Abluft-Wärmerückgewinnungsanlage (1) für Backöfen, die die Abluft aus Rauchgas und Schwaden aus wenigstens einem Backofen (2), auch unterschiedlicher Bauform, einem die Abluft durchmischenden Sammel-Kasten (3) oder -Rohr (31) zugeführt wird,
bei der im Lauf der Abluft nach dem Sammel-Kasten (3) oder - Rohr (31) ein Wärmetauscher (4) vorgesehen ist,
wobei der Wärmetauscher (4) durch ein die Abluft führendes Rohrleitungssystem (41), welches außen mit einem die Wärme der Abluft aufnehmenden Fluid (5) umströmt ist, ausgestaltet ist,
wobei ein Austritts-Sammel-Kasten (6) oder -Rohr im Abluftweg nach dem Wärmetauscher (4) vorgesehen ist, von welchem die abgekühlte Abluft einem Kamin (7) zugeführt wird,
**dadurch gekennzeichnet,**
**dass** am Abluft-Austrittsende (71) des Kamins (7) im Abluftweg ein Saugzug-Gebläse (11) vorgesehen ist, welches die Abluft nach Außen zieht, wobei das Saugzug-Gebläse (11) vermittels einer Regelungseinheit (10) und einem hierzu ausgewertetem Drucksensor (12), der im oder vor dem Sammelkasten (3) oder dem Austritts-Sammelkasten (6) angeordnet ist, so gesteuert ist, dass in dem Sammelkasten (3) oder dem Austritts-Sammelkasten (6) mit einem konstanten Unterdruck die Abluft angesaugt wird.

6. Anlage nach Anspruch 5,
**dadurch gekennzeichnet,**
**dass** parallel zum Wärmetauscher (4) zwischen Sammelkasten (3) und Austritts-Sammelkasten (6) ein Bypass (8) vorgesehen ist, welcher den Abluftstrom durchzuleiten vermag,
wobei ein Verschlussklappensystem (91, 92) vorgesehen ist, welches den Wärmetauscher (4) und/oder den Bypass (8) für die Abluft öffnet oder sperrt,
wobei eine die Anlage überwachende Regelungseinheit (10) (Sicherheitseinheit) vorgesehen ist, welche im Falle einer Fehlfunktion einer der Komponente die Verschlussklappen (91, 92) so einstellt oder steuert, dass der Bypass (8) vollständig geöffnet wird.

7. Anlage nach Anspruch 5 oder 6,
**dadurch gekennzeichnet,**
**dass** der Wärmetauscher (4) durch ein Bündel von parallel angeordneten, die Abluft durchleitenden Rohrleitungen (41) ausgebildet ist, die wiederum in einem Hohlkörper (42) angeordnet sind, der dessen Außenseiten einschließt und mit einem Fluid (5) zur Kühlung der Außenseiten der Rohrleitungen (41) durchflossen wird.

8. Anlage nach Anspruch 7,
**dadurch gekennzeichnet,**
**dass** der Hohlkörper (42) durch ein Rohr ausgebildet ist.

9. Backofen-Abluft-Wärmerückgewinnungsanlage (1) für Backöfen, die die Abluft aus Rauchgas und Schwaden aus wenigstens einem Backofen (2), auch unterschiedlicher Bauform, einem die Abluft durchmischenden Sammel-Kasten (3) oder -Rohr (31) zugeführt wird,
bei der im Lauf der Abluft nach dem Sammel-Kasten (3) oder - Rohr (31) ein Wärmetauscher (4) vorgesehen ist,
wobei der Wärmetauscher (4) durch ein die Abluft führendes Rohrleitungssystem (41), welches außen mit einem die Wärme der Abluft aufnehmenden Fluid (5) umströmt ist, ausgestaltet ist, wobei ein Austritts-Sammel-Kasten (6) oder -Rohr im Abluftweg nach dem Wärmetauscher (4) vorgesehen ist, von welchem die abgekühlte Abluft einem Kamin (7) zugeführt wird,
**dadurch gekennzeichnet,**
**dass** der Wärmetauscher (4) durch ein Bündel von parallel angeordneten, die Abluft durchleitenden Rohrleitungen (41) ausgebildet ist, die wiederum in einem Hohlkörper (42) angeordnet sind, der dessen Außenseiten einschließt und mit einem Fluid (5) zur Kühlung der Außenseiten der Rohrleitungen durchflossen wird.

10. Anlage nach Anspruch 9,
**dadurch gekennzeichnet,**
**dass** der Hohlkörper (42) durch ein Rohr ausgebildet ist.

11. Anlagen nach Anspruch 9 oder 10,
**dadurch gekennzeichnet,**
**dass** parallel zum Wärmetauscher (4) zwischen Sammelkasten (3) und Austritts-Sammelkasten (6) ein Bypass (8) vorgesehen ist, welcher den Abluftstrom durchzuleiten vermag,
wobei ein Verschlussklappensystem (91, 92) vorgesehen ist, welches den Wärmetauscher (4) und/oder den Bypass (8) für die Abluft öffnet oder sperrt,
wobei eine die Anlage überwachende Regelungseinheit (10) (Sicherheitseinheit) vorgesehen ist, welche im Falle einer Fehlfunktion einer der Komponente die Verschlussklappen (91, 92) so einstellt oder steuert, dass der Bypass (8) vollständig geöffnet wird.

12. Anlage nach einem der Ansprüche 9 bis 11,
**dadurch gekennzeichnet,**
**dass** am Abluft-Austrittsende (71) des Kamins (7) im Abluftweg ein Saugzug-Gebläse (11) vorgesehen ist, welches die Abluft nach Außen zieht, wobei das Saugzug-Gebläse (11) vermittels einer Regelungseinheit (10) und einem hierzu ausgewertetem Drucksensor (12), der im Sammelkasten (3) oder dem Austritts-Sammelkasten (6) angeordnet ist, so gesteuert ist, dass in dem Sammelkasten (3) oder dem Austritts-Sammelkasten (6) mit einem konstanten Unterdruck die Abluft angesaugt wird.

13. Anlage nach einem der vorhergehenden Ansprüche,
**dadurch gekennzeichnet,**
**dass** nach einem Backofen (2) ein Drucksensor im Abluftweg vor oder nach einer Stellklappe (21) vorgesehen ist, wobei der Drucksensor über eine Regelungseinheit (10) die motorisch gesteuerte Zustellung der Stellklappe (21) so regelt, dass der im Backofen (2) wirkende Saugzug des Sammelkastens (3) vorwählbar einstellbar ist.

14. Anlage nach einem der vorhergehenden Ansprüche,
**dadurch gekennzeichnet,**
**dass** die Regelungseinheit (10) so ausgestaltet und eingestellt ist, dass in jedem Backofen (2) ein Unterdruck erzeugt wird.

15. Anlage nach Anspruch 14,
**dadurch gekennzeichnet,**
**dass** im Sammelkasten (3) und/oder einem Backofen (2) ein konstanter Unterdruck erzeugt wird.

16. Anlage nach einem der vorhergehenden Ansprüche,
**dadurch gekennzeichnet,**
**dass** der Wärmetauscher (4) der Abluft bis zu dessen Kondensationsgrenze Wärme entzieht, wobei hierzu Sensoren vorgesehen sind, die den Kondensationspunkt der Abluft messen, und eine die Sensoren auswertende Fluid-Regelung den Fluid-Strömungsfluss und damit den Kühlungsgrad steuert.

17. Anlage nach einem der vorhergehenden Ansprüche,
**dadurch gekennzeichnet,**
**dass** die Wandungen der Rohleitungen (41) des Wärmetauschers (4) durch Glattrohre aus Edelstahl ausgestaltet sind.

18. Anlage nach einem der vorhergehenden Ansprüche,
**dadurch gekennzeichnet,**
**dass** die Regelungseinheit (10) die Stellklappen (21) und/oder das Verschlussklappensystem (91, 92) so steuert, dass bei Abschalten der Backöfen (2) deren Abluftzug verschlossen wird um deren Auskühlung zu verringern.
